# EUROPEAN PATENT SPECIFICATION

(11) **EP 4 455 066 B1**
(45) Date of publication and mention of the grant of the patent: **21.01.2026**
(21) Application number: 24170953.4
(22) Date of filing: 18.04.2024
(51) Int. Cl.: B65H 31/02, G06K 13/14

(54) **CARD RECEIVING SYSTEM FOR A CARD PROCESSING MACHINE, AND CORRESPONDING CARD PROCESSING MACHINE**
KARTENAUFNAHMESYSTEM FÜR EINE KARTENVERARBEITUNGSMASCHINE, UND ENTSPRECHENDE KARTENVERARBEITUNGSMASCHINE
SYSTÈME DE RÉCEPTION DE CARTE POUR UNE MACHINE DE TRAITEMENT DE CARTE, ET MACHINE DE TRAITEMENT DE CARTE CORRESPONDANTE

(30) Priority: 21.04.2023 FR 2304049
(43) Date of publication of application: 30.10.2024
(73) Proprietor: Evolis SAS, 49070 Beaucouzé (FR)
(72) Inventor: Veyrent, Stéphane, 49000 Angers (FR); Moreau, Ludovic, 49080 Bouchemaine (FR)
(74) Representative: DTS Patent- und Rechtsanwälte PartmbB

(56) References cited:
- CN-U- 206 278 663
- JP-B2- 6 856 313
- US-A1- 2019 135 569

## Description

### TECHNICAL FIELD

The present invention relates to a card receiving system for a card processing machine, as well as a **card** processing machine including such a card receiving system

### PRIOR ART

There are processing machines designed to process plastic cards, such as bank cards. Such a processing machine is for example a printer which prints a pattern on the card, or an encoding machine which encodes a chip on the card. For this purpose, the processing machine is equipped with a processing module which acts on the card. After processing, the cards are placed in a receptacle of the processing machine where they can be retrieved by a user.

Such a receptacle is in the form of a tank which extends vertically, and where the cards are stacked on top of each other. To prevent the cards from falling or being deposited at an angle, the processing machine includes a door which closes the receptacle and access to the cards requires opening the door.

Although such an arrangement is satisfactory, it is necessary to open and close the door each time the cards have to be removed, which might be daunting for the user, and it is therefore necessary to find an arrangement which limits the maneuvers to perform to recover the cards.

US 2019/135569 A1 describes **a** receiving system for receiving cards according to the preamble of the appended claim 1. JP 6 856313 B2 describes a sheet carrying device. CN 206 278 663 U describes a card collection hopper.

### DISCLOSURE OF THE INVENTION

An object of the present invention is to provide a card receiving system for a card processing machine which has elastic elements which block the cards and which move apart to let the cards pass when they are removed.

For this purpose, a card receiving system for a card processing machine is proposed, said receiving system including:
- a frame having a bottom above which a receptacle is arranged intended to receive a stack of cards and having an opening which extends over the height of the receptacle, and
- on either side of said opening, a slender element which is elastic and which has a first end fastened to the frame at a top portion of the opening and a second end fastened to the frame at a bottom portion of the opening, where each slender element is opposite the opening and intended to be in front of the edges of the cards present in the receptacle.

Advantageously, each slender element is an elastic band.

Advantageously, each end of a slender element is equipped with a bracket fastened to said end, and for each bracket, the frame has a bore through which said bracket is inserted.

The invention also proposes a card processing machine including a receiving system according to one of the preceding variants.

### BRIEF DESCRIPTION OF THE DRAWINGS

The above-mentioned features of the invention, as well as others, will appear more clearly upon reading the following description of an exemplary embodiment, said description being made with reference to the appended drawings, wherein:
[Fig. 1] is a perspective view of a receiving system of a processing machine according to the invention, and
[Fig. 2] is a perspective view of an enlargement of the card receiving system according to the invention.

### DETAILED DISCLOSURE OF EMBODIMENTS

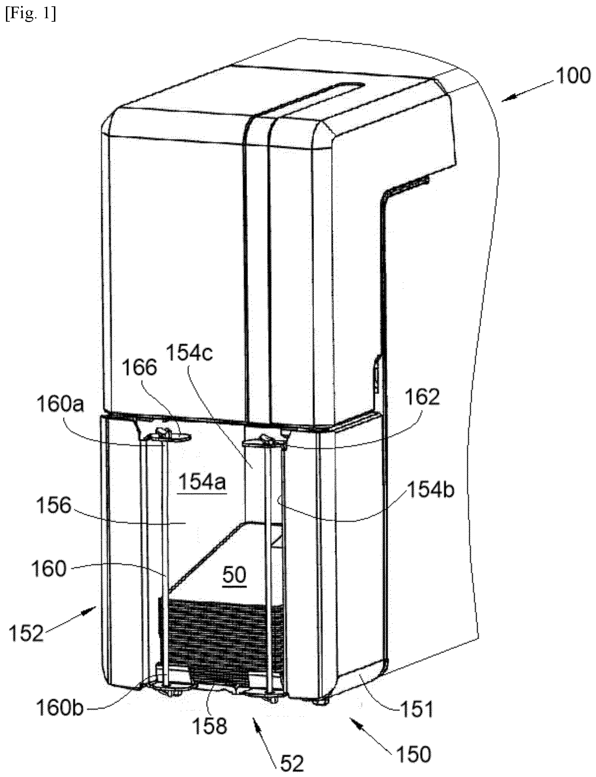

In the following description, the terms relating to a position are considered with reference to a processing machine 100 including a card receiving system 150 according to the invention, where the processing machine 100 is in the position of use, i.e. as it is illustrated in Fig. 1.

Conventionally, the processing machine 100 includes a card feeder, a processing module, a receiving system 150 according to the invention and a transport system which includes means for moving the cards from the card feeder to the processing module, then from the processing module to the receiving system 150, where the means conventionally include rollers which pinch the cards and motors which drive the rollers in rotation. The processing module is thus downstream of the card feeder with respect to the direction of movement of the cards by the transport system and the receiving system 150 is thus downstream of the processing module with respect to the direction of movement of the cards by the transport system.

The processing module is for example a printer or an encoding module, etc. The processing module, the card feeder and the transport system will not be described in more detail because they can take on any form known to a person skilled in the art.

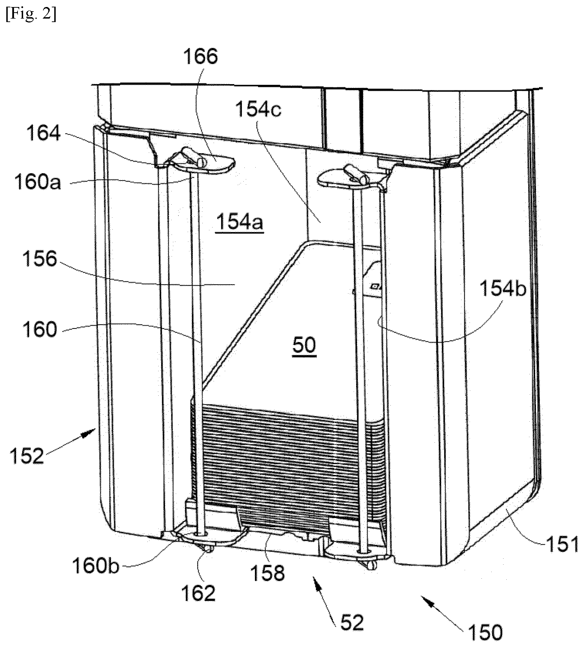

Figs. 1 and 2 show the receiving system 150 which is arranged to receive a stack 52 of cards 50 such as plastic cards.

The receiving system 150 includes a frame 151 inside which a receptacle 152 is arranged. The frame 151 is secured to the frame of the processing machine 100 and it can be a portion of the frame of the processing machine 100 or an attached and fixed element.

The receptacle 152 has a rectangular horizontal section delimited by three vertical walls 154a-c and adapted to the shape of the cards 50. There is a back wall 154c and two side walls 154a-b arranged on either side of the back wall 154c. These vertical walls 154a-c are secured to the frame 151 and form, seen from above, a **U,** where the side walls 154a-b form the branches of the U and where the back wall 154c forms the bottom of the U.

The back wall 154c is at the rear of the receptacle 152 and the latter is open at the front, i.e. at the opening of the **U,** opposite the back wall 154c. Thus, the receptacle 152 has an opening 156 which extends over the height of the receptacle 152 and which therefore allows access to the interior of the receptacle 152.

The frame 151 includes a bottom 158 which extends generally horizontally at the base of the vertical walls 154a-b and on which the stack 52 is placed. Thus, the receptacle 152 is arranged above the bottom 158.

The cards 50 fall on each other and on the bottom 158 from a top portion where the transport system ends in the receiving system 150, for example a top portion of the back wall 154c. The dimensions of the receptacle 152 are designed to ensure that the cards 50 descend into said receptacle 152 with no excessive clearance which could cause poor positioning of the card 50 when it falls.

To block the cards 50 in the receptacle 152, the receiving system 150 includes on either side of the opening 156, a slender element 160 which is elastic and which has a first end 160a fastened to the frame 151 at a top portion of the opening 156, and a second end 160b fastened to the frame 151 at a bottom portion of the opening 156, in particular at the bottom 158.

Each slender element 160 is opposite the opening 156 and in front of the edges of the cards 50 present in the receptacle 152 and it extends in a generally vertical manner.

Thus, when the cards 50 are processed and stored in the receptacle 152, the user grasps the cards 50 through the opening 156 between the two slender elements 160 and pulls them to take them out, which tends to space the slender elements 160 apart thanks to their elasticity. Recovery of the cards 50 is then simple and, in addition, the presence of the slender elements 160 limits the risks of incorrect positioning of the cards 50.

According to a particular embodiment, for cards 50 whose width is for example 54 mm, the distance between the two slender elements 160 is for example 43 mm, i.e. a distance of 5.5 mm relative to each edge of the cards 50. A +/- 3 mm tolerance can be applied to this last distance without departing from the scope of the invention.

According to a particular embodiment, each slender element 160 is an elastic band.

**In** the embodiment of the invention depicted in Figs. 1 and 2, each end 160a-b of a slender element 106 is equipped with a bracket 162 fastened to said end 160a-b, and for each bracket 162, the frame 151 has a bore 164 through which said bracket 162 is inserted and blocked. **In** the embodiment of the invention disclosed herein, each bore 164 is made in a pallet 166 secured to the frame 151.

## Claims

1. A receiving system (150)
for receiving cards (50) for a card processing
machine (100), the receiving system (150) comprising:
- a frame (151) having a bottom (158) above which a receptacle (152) is arranged for receiving a stack (52) of cards (50) and having an opening (156) which extends over a height of the receptacle (152);
the receiving system (150) being **characterised by** further comprising:
- on either side of the opening (156), a slender element (160) which is elastic and which has a first end (160a) fastened to the frame (151) at a top portion of the opening (156) and a second end (160b) fastened to the frame (151) at a bottom portion of the opening (156), where each slender element (160) is positioned to be in front of edges of cards (50) present in the receptacle (152).

2. The receiving system (150) according to claim 1, wherein the slender element (160) is an elastic band.

3. The receiving system (150) according to one of claims 1 or 2, wherein each end (160a-b) of the slender element (106) is equipped with a bracket (162) fastened to said end (160a -b), and wherein for each bracket (162), the frame (151) has a bore (164) through which said bracket (162) is inserted.

4. A card processing machine (100) comprising a receiving system (150) according to one of the preceding claims.

## Patentansprüche

1. Aufnahmesystem (150) zum Aufnehmen von Karten (50) für eine Kartenverarbeitungsmaschine (100), wobei das Aufnahmesystem (150) aufweist:
- ein Gestell (151) mit einem Boden (158), über dem ein Behältnis (152) zum Aufnehmen eines Stapels (52) aus Karten (50) angeordnet ist, und mit einer Öffnung (156), die sich über eine Höhe des Behältnisses (152) erstreckt;
wobei das Aufnahmesystem (150) **dadurch gekennzeichnet ist, dass** es darüber hinaus aufweist:
- ein filigranes Element (160) an jeder Seite der Öffnung (156), das elastisch ist und ein erstes Ende (160a), welches an einem oberen Abschnitt der Öffnung (156) am Gestell (151) befestigt ist, und ein zweites Ende (160b) hat, welches an einem unteren Abschnitt der Öffnung (156) am Gestell (151) befestigt ist, wobei jedes filigrane Element (160) so positioniert ist, dass es sich vor Rändern von in dem Behältnis (152) vorhandenen Karten (50) befindet.

2. Aufnahmesystem (150) nach Anspruch 1, wobei das filigrane Element (160) ein elastisches Band ist.

3. Aufnahmesystem (150) nach einem der Ansprüche 1 oder 2, wobei jedes Ende (160a-b) des filigranen Elements (106) mit einem Haltebügel (162) ausgestattet ist, der an dem Ende (160a-b) befestigt ist, und wobei für jeden Haltebügel (162) das Gestell (151) eine Bohrung (164) hat, durch die der Haltebügel (162) eingeführt ist.

4. Kartenverarbeitungsmaschine (100), aufweisend ein Aufnahmesystem (150) nach einem der vorhergehenden Ansprüche.

## Revendications

1. Système de réception (150) destiné à recevoir des cartes (50) pour une machine de traitement de cartes (100), le système de réception (150) comprenant :
- un cadre (151) présentant un fond (158) au-dessus duquel un réceptacle (152) est agencé pour recevoir une pile (52) de cartes (50) et présentant une ouverture (156) qui s'étend sur la hauteur du réceptacle (152) ;
le système de réception (150) étant **caractérisé en ce qu'**il comprend en outre :
- de chaque côté de l'ouverture (156), un élément longiligne (160) qui est élastique et qui présente une première extrémité (160a) fixée au cadre (151) au niveau d'une portion supérieure de l'ouverture (156) et une seconde extrémité (160b) fixée au cadre (151) au niveau d'une portion inférieure de l'ouverture (156), où chaque élément longiligne (160) est positionné de manière à se trouver devant des bords de cartes (50) présentes dans le réceptacle (152).

2. Système de réception (150) selon la revendication 1, dans lequel l'élément longiligne (160) est une bande élastique.

3. Système de réception (150) selon l'une des revendications 1 ou 2, dans lequel chaque extrémité (160a-b) de l'élément longiligne (106) est équipée d'un support (162) fixé à ladite extrémité (160a-b) et dans lequel, pour chaque support (162), le cadre (151) présente un alésage (164) à travers lequel ledit support (162) est inséré.

4. Machine de traitement de cartes (100) comprenant un système de réception (150) selon l'une des revendications précédentes.
